# FASCICULE DE BREVET EUROPEEN

(11) **EP 1 992 264 B1**
(45) Date de publication et mention de la délivrance du brevet: **20.06.2012**
(21) Numéro de dépôt: 08356066.4
(22) Date de dépôt: 07.05.2008
(51) Int. Cl.: A47J 36/38, A47J 45/06, A47J 27/092, A47J 27/08

(54) **Dispositif d'échappement de vapeur d'un couvercle d'un article culinaire**
Einrichtung eines Deckels eines Kochgeschirrs für das Abführen von Dampf
Steam discharge device for a lid of a cooking utensil

(30) Priorité: 14.05.2007 FR 0703447
(43) Date de publication de la demande: 19.11.2008
(73) Titulaire: Seb S.A., 69130 Ecully (FR)
(72) Inventeur: Cuillery, Pascal, 74210 Faverges (FR)
(74) Mandataire: Kiehl, Hubert

(56) Documents cités:
- EP-A- 0 341 162
- DE-A1- 3 811 675
- GB-A- 2 208 910
- JP-A- 60 260 728
- US-A- 3 973 694

## Description

La présente invention concerne un dispositif d'échappement de vapeur d'un couvercle d'un article culinaire du type casserole, sauteuse, poêle ...

Lors de la cuisson d'aliments dans un article culinaire, de la vapeur d'eau se dégage. On adapte souvent un couvercle sur l'article culinaire afin de limiter l'échappement de vapeur hors de cet article culinaire. Toutefois, dans certaines phases de cuisson, on souhaite laisser s'échapper une partie de la vapeur et il faut pour cela prévoir une ouverture de couvercle obturable de manière contrôlée par un organe d'obturation manoeuvré par un organe de commande. De préférence, on prévoit le plus souvent l'ouverture de couvercle et les organes d'obturation et de commande dans un élément central de couvercle faisant également office de bouton de préhension.

Les dispositifs d'échappement de vapeur les plus ergonomiques présentent un organe de commande placé dans la partie supérieure plus froide du bouton, manoeuvrable par simple pression verticale et une sortie de la vapeur tangentielle au couvercle, éloignée de l'organe de commande.

Un tel dispositif d'échappement de vapeur est décrit dans le document W02006/003281. Le bouton, définissant une conduite d'évacuation de la vapeur, comporte un corps de bouton et un dispositif de régulation fixé sur le corps de bouton. Le dispositif de régulation comprend l'ensemble des moyens permettant la régulation de la vapeur dont un organe de commande manuelle pilotant un obturateur mobile en translation selon une direction axiale.

Ces dispositifs d'échappement de vapeur connus présentent l'inconvénient d'avoir une construction nécessitant un grand nombre de pièces, notamment pour le dispositif de commande de l'obturateur en position haute ou basse, ce qui entraîne un coût de fabrication et de montage très important.

Le document EP 0341162 divulgue un dispositif d'échappement vapeur suivant le préambule de la revendication 1.

Le but de la présente invention est de proposer un dispositif d'échappement de vapeur qui soit simple et très économique à mettre en oeuvre.

Un autre but de l'invention est de proposer un dispositif d'échappement de vapeur qui soit ergonomique : un organe de commande facile à manipuler par simple pression verticale, un bouton facile à saisir par une partie de préhension de petite taille.

Un autre but de l'invention est de proposer un dispositif d'échappement de vapeur qui soit utilisable en toute sécurité avec une partie de préhension et un organe de commande qui restent à une température relativement basse lors de l'utilisation.

Ces buts sont atteints avec, un dispositif d'échappement de vapeur d'un couvercle d'une casserole, d'une sauteuse ou d'une poêle comprenant un bouton comportant une partie de préhension et une assise qui est adaptée à être fixée sur le couvercle et qui est conformée de façon à définir une conduite d'évacuation de la vapeur, un dispositif de régulation d'échappement de vapeur comprenant un obturateur mobile dans le bouton apte à se déplacer entre une position de fermeture de cette conduite d'évacuation et au moins une position d'ouverture pour l'échappement de la vapeur et un organe de commande de l'obturateur disposé dans la partie de préhension du bouton, accessible par l'utilisateur et manoeuvrable par simple pression axiale, du fait que l'organe de commande est un levier monté pivotant et du fait que l'obturateur est mobile en translation dans le bouton.

Selon l'invention, l'utilisation d'un levier pivotant présente l'avantage d'engendrer une construction très simple pour commander l'obturateur.

De plus, le dispositif de régulation qui convertit un mouvement de commande du levier par rotation en un mouvement d'obturation par translation est réalisable dans un encombrement minimum et permet par là même d'avoir un bouton très compact, avec une partie de préhension facile à saisir.

De plus, ce dispositif de régulation présente l'avantage d'éloigner la conduite d'échappement de vapeur et l'obturateur, situés dans l'assise du bouton, du levier, situé plus haut dans la partie de préhension du bouton. Ce qui permet d'éviter tout risque de brûlures lors de la manipulation du dispositif d'échappement vapeur.

Avantageusement, la conduite d'évacuation de vapeur est tangentielle au couvercle.

Cette disposition permet de diriger le flux d'échappement de vapeur hors de la partie de préhension du bouton d'échappement vapeur, donc de la main de l'utilisateur.

De préférence, l'obturateur est mobile selon une direction axiale.

Avantageusement, l'obturateur et le levier sont reliés entre eux par au moins une charnière.

Cette disposition permet de réaliser une construction simple par exemple deux pièces plastiques encliquetées.

De préférence, l'obturateur et le levier forment une même et unique pièce.

Dans cette construction, par charnière, on entend une réduction de l'épaisseur matière dans la zone de liaison des deux pièces s'étendant parallèlement à l'axe de rotation du levier qui autorise un mouvement de rotation d'amplitude relativement faible entre le levier et l'obturateur.

Cette disposition permet d'obtenir un dispositif de commande comprenant une seule pièce, très économique.

Avantageusement, le dispositif de régulation d'échappement de vapeur est réalisé en une matière plastique tel que le polyamide par une technique d'injection.

Cette disposition permet de réaliser une pièce qui résiste à la température et à la vapeur et une charnière qui reste souple et solide.

De préférence, le levier comprend au moins une languette latérale perpendiculaire à l'axe de rotation comportant une partie crantée venant porter en appui élastique glissant sur une protubérance du bouton, la partie crantée comprenant au moins un cran de positionnement en position de fermeture et un cran de positionnement en position d'ouverture.

Cette disposition permet de régler à volonté l'échappement de vapeur hors de l'article culinaire de façon simple.

L'invention sera mieux comprise à l'étude des modes de réalisation pris à titre nullement limitatif et illustrés dans les figures annexées dans lesquelles :
- La figure 1 est une vue en coupe d'un dispositif d'échappement de vapeur selon un mode particulier de réalisation de l'invention, en position d'ouverture.
- La figure 2 illustre une vue éclatée en perspective du dispositif de la fig 1.
- La figure 3 illustre une vue en coupe du dispositif de la fig 1 en position de fermeture.
- La figure 4 illustre une vue en coupe partielle selon la ligne IV-IV de la fig.2.
- La figure 5 illustre une vue en coupe partielle selon la ligne V-V de la fig.4.

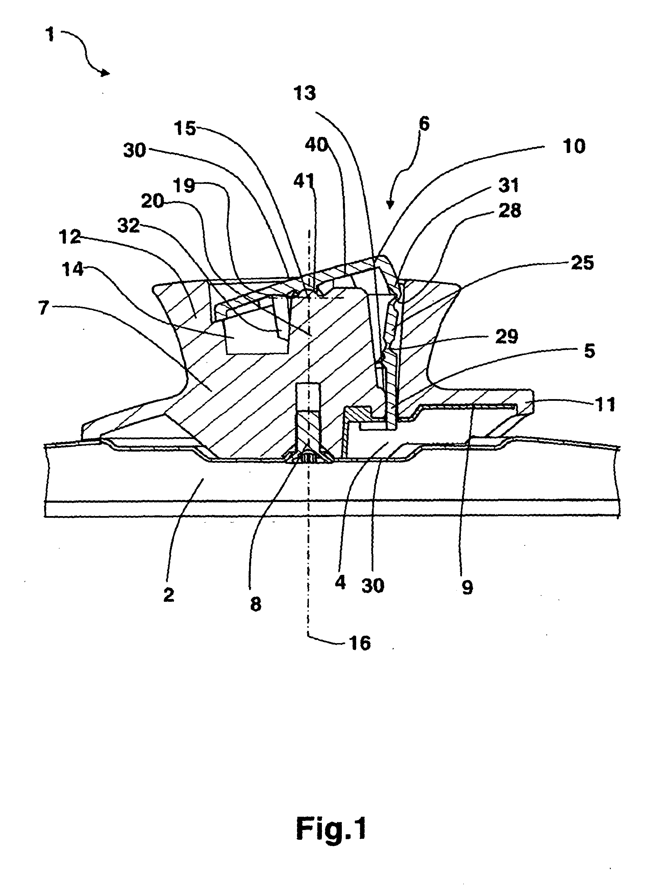

Les figures 1 à 3 représentent un couvercle 2 d'un article culinaire comprenant un orifice de passage 30 de la vapeur qui est générée par la cuisson des aliments disposés dans l'article culinaire. Sur ce couvercle 2 est fixé un dispositif d'échappement de vapeur 1 permettant de réguler la quantité de vapeur évacuée hors de l'article culinaire.

Le dispositif d'échappement de vapeur 1 réalisé conformément à l'invention, comprend un bouton 7 et un dispositif de régulation 6 comportant un obturateur 5 et un organe de commande 10 constitué par un levier.

Le bouton 7 comporte une assise 11 qui est adaptée à être fixée sur le couvercle par une vis 8 et qui est conformée de façon à former avec ce dernier une conduite d'évacuation de la vapeur 4, tangentielle au couvercle 2. La partie de la conduite formée par l'assise 11 du bouton 7 est habillée par un capot 9 pour des raisons d'alimentarité, des condensats formés dans la conduite et en contact avec la matière non alimentaire du bouton 7 pouvant retourner dans l'article culinaire. Le bouton 7 comprend également une partie de préhension 12 dépassant au dessus de l'assise 11 de forme sensiblement cylindrique. L'assise 11 du bouton 7 s'étend latéralement depuis la base de la partie de préhension 12 sur une distance d'au moins deux centimètres.

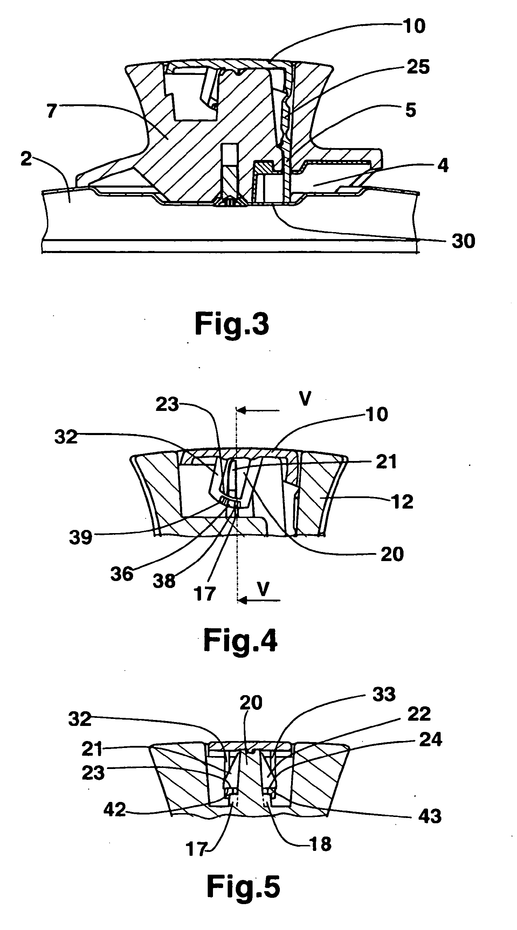

L'obturateur 5 est adapté à contrôler l'échappement de la vapeur et de ce fait, il est conformé de façon à pouvoir coulisser verticalement selon une direction axiale 16 dans un logement 13 ménagé dans le bouton 7 et dans le capot 9. Il est apte à pénétrer plus ou moins dans la conduite d'évacuation 4 entre une position de fermeture (fig.3) et au moins une position d'ouverture (fig.1) de l'échappement de vapeur.

Le bouton 7 comprend une cavité supérieure 14 ménagée dans la partie de préhension 12 permettant le logement du levier 10 monté pivotant sur le bouton 7 selon un axe de rotation horizontal 15. La face supérieure du levier 10 est accessible par l'utilisateur et forme une partie de la face supérieure de la partie de préhension 12 du bouton 7.

L'obturateur 5 comprend une face supérieure 50 reliée à une extrémité 31 du levier 10 par une pièce de liaison 25 de forme parallélépipédique comportant à chacune de ses extrémités une charnière 28,29 s'étendant parallèlement à l'axe de rotation 15 du levier 10. Par charnière, on entend une réduction de l'épaisseur matière qui autorise un mouvement de rotation d'amplitude relativement faible des deux parties de la pièce. L'épaisseur matière de la charnière 28,29 est comprise entre 0,6 et 1 millimètre, de préférence 0,8 millimètre.

La pièce unique formée par le levier 10, la pièce de liaison 25 et l'obturateur 5 est réalisée en une matière plastique tel que le polyamide par une technique d'injection.

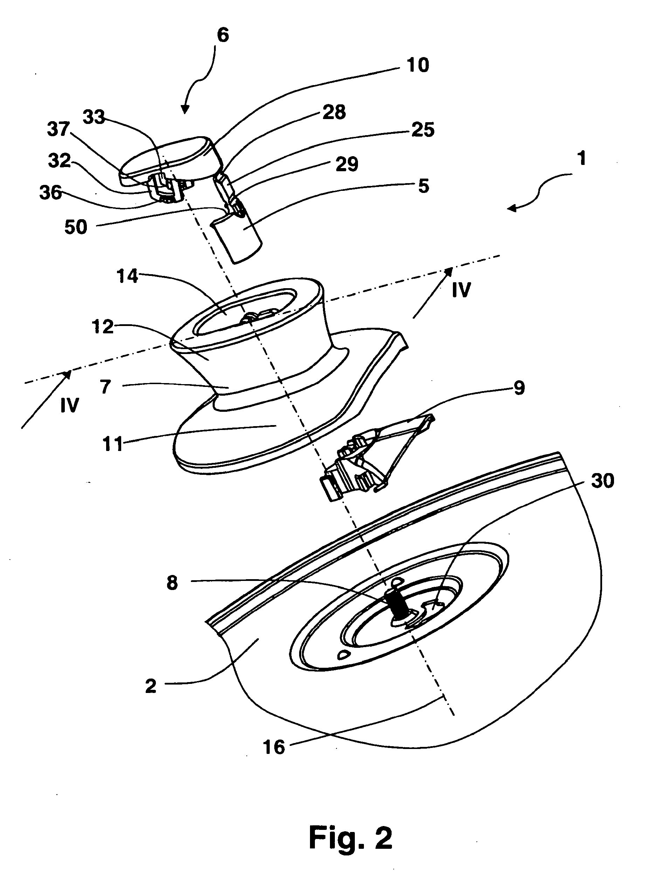

Le dispositif d'échappement de vapeur 1 tel que visible sur les figures 2 et 4, comporte des moyens pour assurer le maintien du levier 10 soit en position d'ouverture soit en position de fermeture. Pour cela, le levier 10 comprend deux languettes latérales 32,33 perpendiculaires à l'axe de rotation 15 et s'étendant vers le bas. Les languettes latérales 32,33 comportent à leurs extrémités une partie crantée 36,37 venant porter en appui élastique glissant sur une protubérance 17,18 du bouton. Les parties crantées 36,37 telle que la partie 36 comprennent au moins un cran 38 de positionnement en position de fermeture et un cran 39 de positionnement en position d'ouverture.

Tel que visible sur la figure 1, le levier 10 comporte une face inférieure 40 comprenant en son centre une partie concave 41 en forme de demi cylindre s'étendant transversalement selon l'axe 15 et qui coopère avec une partie convexe 19 située sur une excroissance de matière 20 du bouton 7 dans la cavité 14 ménagée dans la partie de préhension 12 du bouton 7 pour former un demi palier.

Tel que visible sur les figures 4 et 5, les deux languettes latérales 32,33 ont une forme de U dont les deux branches sont attenantes au levier 10. L'excroissance 20 comprend sur ses côtés deux nervures verticales 21,22 comportant chacune une face inférieure 23,24. Chaque partie inférieure du U comporte une face interne 42,43 qui coopère avec chaque face inférieure 23,24 des nervures 21,22 pour former un demi palier, complémentaire du premier demi palier pour la rotation du levier 10.

Chaque nervure 21,22 a un profil en forme de rampe pour permettre une déformation latérale des deux languettes 32,33 pour le montage par encliquetage du levier.

Le fonctionnement du dispositif d'échappement de vapeur 1 est particulièrement simple : en appuyant verticalement sur le levier 10 à gauche de l'axe 15 sur la figure 1, l'utilisateur provoque la translation de l'obturateur 5 dans sa position d'ouverture. En appuyant sur la partie droite du levier 10, l'utilisateur ramène l'obturateur 5 dans sa position de fermeture de la conduite d'évacuation de vapeur 4 (fig.3).

En prévoyant une pluralité de crans de positionnement entre le cran de positionnement en position de fermeture 38 et le cran de positionnement en position d'ouverture 39, l'utilisateur a la possibilité d'obtenir plusieurs positions intermédiaires entre la position d'ouverture et la position de fermeture de la conduite d'échappement de vapeur.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention, defini par les revendications.

## Revendications

1. Dispositif d'échappement de vapeur (1) d'un couvercle (2) d'une casserole, d'une sauteuse ou d'une poêle comprenant un bouton (7) comportant une partie de préhension (12) et une assise (11) qui est adaptée à être fixée sur le couvercle (2) et qui est conformée de façon à définir une conduite d'évacuation de la vapeur (4), un dispositif de régulation d'échappement de vapeur (6) comprenant un obturateur (5) mobile dans le bouton (7) apte à se déplacer entre une position de fermeture de cette conduite d'évacuation (4) et au moins une position d'ouverture pour l'échappement de la vapeur et un organe de commande (10) de l'obturateur (5) disposé dans la partie de préhension (12) du bouton (7), accessible par l'utilisateur et manoeuvrable par simple pression axiale, l'organe de commande (10) étant un levier monté pivotant, **caractérisé en ce que** l'obturateur (5) est mobile en translation dans le bouton (7).

2. Dispositif d'échappement de vapeur selon la revendication 1, **caractérisé en ce que** la conduite d'évacuation de la vapeur (4) est tangentielle au couvercle (2).

3. Dispositif d'échappement de vapeur selon l'une des revendications 1 à 2, **caractérisé en ce que** l'obturateur (5) est mobile selon une direction axiale (16).

4. Dispositif d'échappement de vapeur selon l'une des revendications 1 à 3, **caractérisé en ce que** l'obturateur (5) et le levier (10) sont reliés entre eux par au moins une charnière (28,29).

5. Dispositif d'échappement de vapeur selon l'une des revendications 1 à 4, **caractérisé en ce que** l'obturateur (5) et le levier (10) forment une même et unique pièce.

6. Dispositif d'échappement de vapeur selon l'une des revendications 1 à 5, **caractérisé en ce que** le dispositif de régulation d'échappement de vapeur (6) est réalisé en une matière plastique tel que le polyamide par une technique d'injection.

7. Dispositif d'échappement de vapeur selon l'une des revendications 1 à 6, **caractérisé en ce que** le levier (10) comprend au moins une languette latérale (32) perpendiculaire à l'axe de rotation (15) comportant une partie crantée (36) venant porter en appui élastique glissant sur une protubérance (17) du bouton, la partie crantée comprenant au moins un cran de positionnement (38) en position de fermeture et un cran de positionnement (39) en position d'ouverture.

## Claims

1. A steam discharge device (1) for the lid (2) of a saucepan, a deep frying pan or a frying pan comprising a knob (7) containing a gripping part (12) and a base (11) adapted to be fixed on the lid (2) and which is shaped so as to define a steam discharge pipe (4), a steam discharge regulation device (6) comprising an obturator (5) movable inside the knob (7) between a closed position of this discharge pipe (4) and at least one open position for the discharge of the steam and a control member (10) for the obturator (5) arranged in the gripping part (12) of the knob (7), accessible to the user who can operate it by simple axial pressure, the control member (10) being a lever mounted pivotally, **characterised in that** the obturator (5) is mobile in translation in the knob (7).

2. A steam discharge device according to claim 1, **characterised in that** the steam discharge pipe (4) is tangential to the lid (2).

3. A steam discharge device according to one of claims 1 to 2, **characterised in that** the obturator (5) is mobile in an axial direction (16).

4. A steam discharge device according to one of claims 1 to 3, **characterised in that** the obturator (5) and the lever (10) are connected with each other by at least one hinge (28,29).

5. A steam discharge device according to one of claims 1 to 4, **characterised in that** the obturator (5) and the lever (10) form a single part.

6. A steam discharge device according to one of claims 1 to 5, **characterised in that** the steam discharge regulation device (6) is made of a plastic material such as polyamide by injection technique.

7. A steam discharge device according to one of claims 1 to 6, **characterised in that** the lever (10) comprises at least one side tab (32) perpendicular to the axis of rotation (15) containing a notched portion (36) which rests elastically slidingly over a protrusion (17) of the knob, the notched portion comprising at least one locating notch (38) in closed position and one locating notch (39) in open position.

## Patentansprüche

1. Dampfabführvorrichtung (1) eines Deckels (2) eines Topfes, einer Pfanne oder eines Kochgeschirrs, umfassend einen Knopf (7), der einen Greifteil (12) und eine Grundplatte (11) umfasst, die angepasst ist, um auf dem Deckel (2) befestigt zu werden, und die so ausgeführt ist, dass sie einen Dampfableitkanal (4) definiert, wobei eine Regelvorrichtung für die Dampfabführung (6) einen Verschluss (5), der im Knopf (7) beweglich und imstande ist, sich zwischen einer Position zum Verschließen des Ableitkanals (4) und mindestens einer Öffnungsposition für die Dampfabführung zu bewegen, und ein Betätigungselement (10) für den Verschluss (5) umfasst, das im Greifteil (12) des Knopfes (7) angeordnet ist und das für den Benutzer zugänglich und durch einfachen axialen Druck betätigt werden kann, wobei das Betätigungselement (10) ein schwenkbar angebrachter Hebel ist, **dadurch gekennzeichnet, dass** der Verschluss (5) im Knopf (7) verschiebbar ist.

2. Dampfabführvorrichtung nach Anspruch 1, **dadurch gekennzeichnet, dass** der Dampfableitkanal (4) tangential zum Deckel (2) verläuft.

3. Dampfabführvorrichtung nach einem der Ansprüche 1 bis 2, **dadurch gekennzeichnet, dass** der Verschluss (5) gemäß einer axialen Richtung (16) beweglich ist.

4. Dampfabführvorrichtung nach einem der Ansprüche 1 bis 3, **dadurch gekennzeichnet, dass** der Verschluss (5) und der Hebel (10) über mindestens ein Scharnier (28, 29) miteinander verbunden sind.

5. Dampfabführvorrichtung nach einem der Ansprüche 1 bis 4, **dadurch gekennzeichnet, dass** der Verschluss (5) und der Hebel (10) ein einteiliges Stück bilden.

6. Dampfabführvorrichtung nach einem der Ansprüche 1 bis 5, **dadurch gekennzeichnet, dass** die Regelvorrichtung für die Dampfabführung (6) aus einem Kunststoffmaterial, wie etwa Polyamid, mittels einer Spritzgießtechnik hergestellt ist.

7. Dampfabführvorrichtung nach einem der Ansprüche 1 bis 6, **dadurch gekennzeichnet, dass** der Hebel (10) mindestens eine seitliche Lasche (32) umfasst, die senkrecht zur Rotationsachse (15) verläuft und die einen gerasteten Teil (36) umfasst, der elastisch gleitend gegen einen Vorsprung (17) des Knopfes drückt, wobei der gerastete Teil mindestens eine Raste für die Einstellung (38) in Schließposition und eine Raste für die Einstellung (39) in Öffnungsposition umfasst.
